# FASCICULE DE BREVET EUROPEEN

(11) **EP 0 656 257 B1**
(45) Date de publication et mention de la délivrance du brevet: **16.06.1999**
(21) Numéro de dépôt: 94402737.4
(22) Date de dépôt: 30.11.1994
(51) Int. Cl.: B32B 17/10, H05B 3/86, C03C 27/12

(54) **Procédé de fabrication d'un vitrage en verre feuilleté comportant des fils métalliques disposés dans la couche intermédiaire thermoplastique**
Verfahren zur Herstellung einer Verbundglasscheibe mit in der thermoplastischen Zwischenschicht eingebetteten Metalldrähten
Proces for making a laminated glass containing metal wires in the thermoplastic interlayer

(30) Priorité: 02.12.1993 DE 4341017
(43) Date de publication de la demande: 07.06.1995
(73) Titulaire: SAINT-GOBAIN VITRAGE, 92400 Courbevoie (FR)
(72) Inventeur: Reul, Bernard, D-52062 Aachen (DE); Immerschitt, Stefan, Dr., D-52134 Herzogenrath (DE)
(74) Mandataire: Muller, René

(56) Documents cités:
- EP-A- 0 385 791
- DE-A- 1 490 461
- DE-A- 1 933 391
- DE-A- 2 927 237
- GB-A- 972 453
- US-A- 4 013 212
- US-A- 5 061 827

## Description

La présente invention concerne un procédé de fabrication d'un vitrage en verre feuilleté constitué de plusieurs couches, comprenant un ou plusieurs fils disposés à l'intérieur d'une couche intermédiaire thermoplastique, selon lequel, avant l'assemblage des couches, une connexion conductrice électrique est établie entre les fils et un ou plusieurs éléments métalliques, puis les couches sont réunies les unes aux autres moyennant un apport de chaleur et de pression.

Des vitrages en verre feuilleté comportant des fils insérés dans la couche intermédiaire thermoplastique et connectés à des éléments métalliques sont utilisés, par exemple dans des véhicules automobiles, comme vitrages en verre chauffables électriquement et/ou comme vitrages-antennes. D'autres applications de tels vitrages concernent, en particulier, le domaine du bâtiment où ils peuvent être utilisés également comme vitrages chauffables électriquement, mais aussi, par exemple comme vitrages d'alarme pour la protection de locaux contre les effractions et les évasions ou comme vitrages de protection électrique. Les fils sont habituellement mis en contact, à l'intérieur du vitrage en verre feuilleté, avec un ou plusieurs éléments métalliques qui mènent, par exemple, à un élément de raccordement électrique accessible de l'extérieur.

Lorsque les fils disposés dans la couche intermédiaire thermoplastique servent de fils chauffants, en règle générale, plusieurs fils chauffants sont montés en parallèle, en étant connectés à des lignes collectrices disposées le long de deux bords opposés du vitrage. Les fils disposés dans le vitrage en verre feuilleté sont en règle générale très fins et ont, par exemple, un diamètre de 0,005 à 0,1 mm, pour altérer le moins possible la transparence du vitrage.De tels vitrages chauffants sont connus par exemple de l'US-A-3 895 433, du DE-OS-2 127 693 ou du DE-OS-3 001 554. Lorsque les fils présentent une surface métallique, ils peuvent être visibles par des réflexions de la lumière même dans le cas de petits diamètres. Ces réflexions de la lumière peuvent s'avérer particulièrement gênantes lorsque l'observateur et la source lumineuse se trouvent du même côté du vitrage. Pour éviter de telles perturbations gênantes, il est connu d'utiliser des fils métalliques qui sont superficiellement noircis. Cependant, de tels fils métalliques superficiellement noircis se soudent mal ou se connectent mal d'une autre manière à des éléments conducteurs électriques et, de plus, les couches superficielles absorbant la lumière augmentent fréquemment de manière indésirable la résistance de contact entre les fils et les éléments métalliques.

Le brevet GB 972,453 décrit un vitrage en verre feuilleté comprenant des fils chauffants, les fils chauffants étant munis d'une couche superficielle qui réduit la réfletivité mais les zones de connexion en sont dépourvues, la couche superficielle étant réalisée après la connexion des fils.

L'invention a pour but de procurer un procédé de fabrication d'un vitrage en verre feuilleté du type spécifié qui, même lorsque l'on utilise des fils présentant une couche superficielle absorbant la lumière, garantisse une bonne connexion électrique entre les fils et les éléments métalliques.

Suivant l'invention, ce but est atteint par le fait que les fils, avant la connexion électrique aux éléments métalliques, sont chauffés aux endroits de connexion par une application d'énergie adéquate, localement limitée, au point que de cette façon des couches superficielles adhérant aux surfaces des fils et provoquant une résistance de contact accrue, sont éliminées.

Le procédé conforme à l'invention prévoit donc, pour la fabrication des vitrages en verre feuilleté, d'utiliser des fils peu réfléchissants, mais, dans le cas de ces fils, d'éliminer localement aux endroits prévus pour la connexion électrique, la couche superficielle par un chauffage adéquat. Sur le reste de leur longueur, les fils conservent par contre leur couche superficielle et ainsi leur pouvoir élevé d'absorption de la lumière.

Le traitement conforme à l'invention assure que les couches de matière supérieure soient éliminées par le chauffage adéquat aux endroits de connexion. Bien que le mode d'action du procédé conforme à l'invention ne s'explique pas encore entièrement, on peut cependant présumer que la matière des couches supérieures, par exemple du graphite et/ou de l'oxyde du métal du fil se détache de la surface du fil et/ou soit brûlée par le choc thermique ou soit éliminée par vaporisation, par pyrolyse, ou par réduction en métal.

Selon le type de métal utilisé pour les fils, ces fils peuvent être chauffés par le procédé conforme à l'invention, aux endroits de connexion, à une température qui est certes inférieure à la température de fusion du métal du fil, mais supérieure à la température de volatilisation de l'oxyde métallique correspondant. Ainsi, par exemple, dans le cas du tungstène utilisé comme métal de fil, le point de fusion est d'environ 3400°C, tandis que la température de volatilisation du trioxyde de tungstène est d'environ 1750°C.

L'application d'énergie peut, par exemple, s'effectuer avant la pose des fils sur la couche thermoplastique. De cette façon, les fils sont déjà préparés pour la connexion électrique avant leur pose.

Dans ce cas, il est, par exemple, possible de coupler le processus de la pose des fils avec le traitement superficiel par le fait que pendant l'opération de pose les segments de fil, qui sont prévus comme endroits de connexion à l'élément métallique, par exemple une barre collectrice, sont attaqués par l'énergie immédiatement avant la pose de ces segments de fil sur le conducteur collecteur.

Suivant une forme de réalisation particulièrement avantageuse du procédé conforme à l'invention, avant l'assemblage des couches formant le vitrage en verre feuilleté, tout d'abord les éléments métalliques et ensuite les fils sont déposés par-dessus les éléments métalliques sur la couche intermédiaire thermoplastique et sont fixés et l'application d'énergie ne s'effectue qu'après la pose des fils sur la couche thermoplastique par-dessus les éléments métalliques.

Bien que de très hautes températures soient le plus souvent nécessaires pour l'élimination des couches superficielles, l'application d'énergie peut aussi être prévue pour des fils qui sont déjà posés et fixés sur la feuille de matière thermoplastique, sans altérer la couche thermoplastique. Grâce à l'application d'énergie adéquate localement limitée, il est en effet possible d'une part d'atteindre des températures suffisamment élevées pour l'élimination de la couche superficielle des fils et d'autre part d'éviter malgré tout un échauffement perturbant leur environnement, en utilisant une densité d'énergie très élevée, localement limitée et d'une durée relativement courte. Ceci s'effectue au mieux en appliquant de brèves impulsions d'énergie d'une densité de puissance élevée aux endroits à traiter. De cette façon, l'échauffement souhaité se limite en substance aux fils eux-mêmes.

Selon une forme de réalisation particulièrement avantageuse du procédé conforme à l'invention, l'application d'énergie aux endroits de connexion s'effectue au moyen d'un rayon laser, le traitement au laser pouvant le cas échéant être effectué sous une atmosphère gazeuse réductrice.

Selon une autre forme de réalisation, l'application d'énergie est assuré au moyen d'une microflamme de gaz pour laquelle le gaz combustible utilisé est, par exemple, de l'hydrogène. Une régulation électronique permet de régir le temps d'action de la flamme sur l'endroit de connexion et ainsi la température. Dans le cas de l'utilisation de flammes de gaz dont les longueurs sont dans une certaine mesure, d'un ordre de grandeur de 1 mm ou même moins, seule une très faible quantité de chaleur est transmise sous une forme concentrée aux endroits de connexion. De la sorte il est possible de ne chauffer que les endroits de connexion eux-mêmes, sans altérer leurs environs.

D'autres avantages, aspects avantageux et développements de l'invention ressortiront des revendications dépendantes et de la description suivante d'un exemple de réalisation donné avec référence au dessin annexé dans lequel :
la Fig. 1 est une vue en élévation d'une couche intermédiaire thermoplastique prévue pour un vitrage chauffant et garnie de fils et de barres collectrices, et
la Fig. 2 est une vue fragmentaire à plus grande échelle de la Fig. 1 pendant l'application d'énergie sur les endroits de connexion.

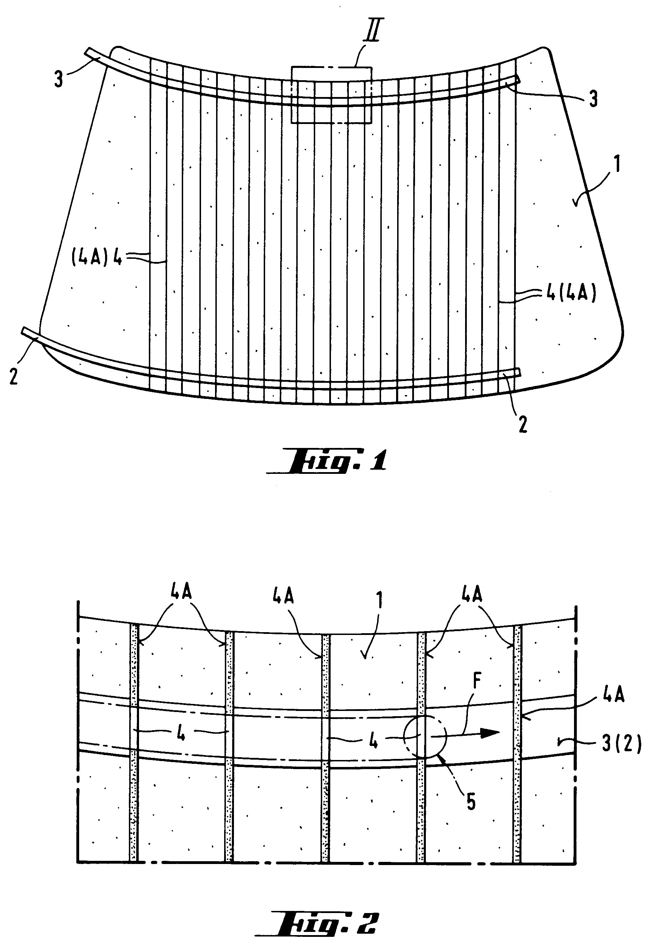

La couche intermédiaire thermoplastique 1 représentée sur la Fig. 1 doit être incorporée ultérieurement dans un pare-brise chauffable à l'électricité. Elle est coupée à ses dimensions finales et est habituellement faite de polyvinylbutyral. Sur la couche intermédiaire 1, deux rubans de clinquant de cuivre étamé 2, 3 formant des barres collectrices pour les fils 4 servant de conducteurs chauffants sont tout d'abord posés parallèlement aux bords longitudinaux de la couche intermédiaire et à courte distance de ceux-ci et sont fixés sur ladite couche thermoplastique par chauffage. Ensuite, les fils 4 sont déposés sur la couche thermoplastique 1. Aux endroits prévus pour la connexion électrique, les fils 4 sont placés sur les barres collectrices 2, 3. Les fils 4 sont, de préférence, des fils de tungstène noircis d'un diamètre de 20 à 50 µm.

Le traitement superficiel des fils 4, conforme à l'invention, s'effectue, comme le montre clairement la Fig. 2, aux endroits où ils sont posés sur les barres collectrices 2, 3. Dans ce cas, l'application d'énergie aux endroits de connexion s'effectue au moyen d'un rayon laser, par le fait que le foyer 5 d'un faisceau de rayons laser dirigé perpendiculairement sur les barres collectrices 2, 3 est déplacé dans le sens de la flèche F sur les barres collectrices. Le niveau de l'énergie appliquée peut dans ce cas être réglé dans de larges limites par une régulation de la puissance du rayonnement, une modification de la durée des impulsions et de la fréquence des impulsions dans le cas de lasers pulsés ainsi que par une variation de la vitesse de déplacement du rayon laser attaquant le fil, les conditions optimales étant déterminées à l'avance par des essais.

Aux fins de la présente invention, différents lasers peuvent être utilisés. L'utilisation d'un laser présentant une longueur d'onde d'émission inférieure à 2,5 µm, a, en l'occurrence, l'avantage que la lumière laser peut être guidée vers les endroits souhaités par un câble en fibres de verre. Dans ce cas, le câble en fibres de verre pourvu à son extrémité d'une optique de focalisation adéquate est déplacé par son optique de focalisation sur les fils, tandis que le laser peut rester immobile. Bien entendu, un dispositif mécanique approprié peut également être utilisé à cet effet, par exemple une machine à chariot en croix comportant un chariot à commande numérique qui guide l'optique laser à une distance déterminée correspondant au trajet prédéfini sur les segments de fil disposés au-dessus des barres collectrices 2, 3.

Pour le traitement des endroits de connexion, on utilise , par exemple, un laser Nd:YAG pulsé avec une longueur d'onde d'émission lambda = 1,6 µm et les paramètres suivants pour le procédé : énergie d'impulsion 2 J, durée d'impulsion 1 ms, fréquence d'impulsions 100 Hz et vitesse de déplacement 3 m/min. Bien entendu, la vitesse de déplacement peut être accrue dans le cas d'une puissance plus élevée du laser.

Après que, de cette manière, la surface des fils de tungstène au-dessus des barres collectrices 2 et 3 a été débarrassée localement de la couche superficielle 4A qui y adhère, comme par exemple, du graphite, des oxydes de tungstène et d'autres impuretés, un deuxième ruban de cuivre étamé d'un côté est posé sur chacune des barres collectrices 2 et 3 avec son côté étamé tourné vers le bas. A l'aide d'un fer à souder qui est ensuite guidé sur ce deuxième ruban de clinquant de cuivre, les couches d'étain sont fondues et s'unissent aux segments nettoyés des fils de tungstène.

En lieu et place de ce qui précède, on peut faire en sorte que l'attaque des fils au moyen du faisceau laser soit effectuée de telle sorte que conjointement avec le nettoyage superficiel des fils, l'étain soit fondu et que la jonction soudée entre les fils et les barres collectrices soit ainsi directement établie.

La couche intermédiaire thermoplastique 1 ainsi préparée est à présent placée entre deux feuilles de verre et unie à celles-ci pour former le vitrage en verre feuilleté par un traitement adéquat sous pression et chaleur dans un autoclave après élimination de l'air occlus.

## Revendications

1. Procédé de fabrication d'un vitrage en verre feuilleté constitué de plusieurs couches, comprenant un ou plusieurs fils disposés à l'intérieur d'une couche intermédiaire thermoplastique, selon lequel, avant l'assemblage des couches, une connexion conductrice électrique est établie entre les fils et un ou plusieurs éléments métalliques, puis les couches sont réunies les unes aux autres moyennant un apport de chaleur et de pression, caractérisé en ce que des fils présentant une couche superficielle sur toute leur longueur, avant la connexion électrique aux éléments métalliques, sont chauffés aux endroits de connexion par une application d'énergie adéquate, localement limitée, au point que de cette façon des couches superficielles adhérant aux surfaces des fils et provoquant une résistance de contact accrue, sont éliminées.

2. Procédé suivant la revendication 1, caractérisé en ce qu'avant l'assemblage des couches formant le vitrage en verre feuilleté, tout d'abord les éléments métalliques et ensuite les fils sont déposés par-dessus les éléments métalliques sur la couche intermédiaire thermoplastique et sont fixés et l'application d'énergie ne s'effectue qu'après la pose des fils sur la couche thermoplastique par-dessus les éléments métalliques.

3. Procédé suivant la revendication 1 ou 2, caractérisé en ce que l'application d'énergie aux endroits de connexion est effectué par un rayon laser.

4. Procédé suivant la revendication 3, caractérisé en ce qu'un rayon laser d'une longueur d'onde d'émission inférieure à 2,5 µm est utilisé.

5. Procédé suivant la revendication 1 ou 2, caractérisé en ce que l'application d'énergie locale aux endroits de connexion est assurée par une microflamme de gaz.

6. Procédé suivant l'une quelconque des revendications 1 à 5, caractérisé en ce que les endroits de connexion des fils pendant l'application d'énergie sont exposés à une atmosphère gazeuse réductrice.

7. Procédé suivant l'une quelconque des revendications 2 à 6, caractérisé en ce que des éléments métalliques revêtus de métal de soudure sont utilisés et que l'application d'énergie est effectuée d'une manière telle que, conjointement avec l'élimination des couches superficielles, le contact électrique entre les fils et les éléments métalliques est établi par le métal de soudure fondu.

8. Procédé suivant l'une quelconque des revendications 1 à 6, caractérisé en ce que la connexion conductrice électrique entre les fils et les éléments métalliques est établie par un adhésif conducteur électrique.

9. Utilisation du procédé suivant l'une quelconque des revendications 1 à 8, pour fabriquer un vitrage en verre feuilleté chauffable électriquement comportant des fils chauffants en tungstène disposés en un montage parallèle dans la couche intermédiaire thermoplastique et connectés électriquement à des éléments métalliques tel que des bandes collectrices.

## Claims

1. Method of manufacturing a glazing pane made of laminated glass consisting of several layers, comprising one or more wires disposed inside a thermoplastic intermediate layer, according to which, before assembling the layers, a conductive electrical connection is established between the wires and one or more metallic elements, and then the layers are connected to each other by means of an addition of heat and pressure, characterised in that wires having a surface layer over the entire length, before the electrical connection to the metallic elements, are heated at the points of connection by a suitable application of energy, limited locally, to the point that in this way surface layers adhering to the surfaces of the wire and causing an increased contact resistance are eliminated.

2. Method according to Claim 1, characterised in that, before the assembly of the layers forming the glazing pane made of laminated glass, first of all the metallic elements and then the wires are deposited over the metallic elements on the thermoplastic intermediate layer and are fixed, and the application of energy is effected only after the placing of the wires on the thermoplastic layer on top of the metallic elements.

3. Method according to Claim 1 or 2, characterised in that the application of energy to the connection points is effected by a laser beam.

4. Method according to Claim 3, characterised in that a laser beam with an emission wavelength of less than 2.5 µm is used.

5. Method according to Claim 1 or 2, characterised in that the local application of energy to the connection points is provided by a gas microflame.

6. Method according to any one of Claims 1 to 5, characterised in that the connection points of the wires during the application of energy are exposed to a reducing gaseous atmosphere.

7. Method according to any one of Claims 2 to 6, characterised in that metallic elements coated with soldering metal are used and in that the application of energy is effected in such a way that, conjointly with the elimination of the surface layers, the electrical contact between the wires and the metallic elements is established by the molten soldering metal.

8. Method according to any one of Claims 1 to 6, characterised in that the conductive electrical connection between the wires and the metallic elements is established by means of an electrically conductive adhesive.

9. Use of the method according to any one of Claims 1 to 8, for manufacturing an electrically heatable laminated glass glazing pane incorporating tungsten heating wires disposed in a parallel mounting in a thermoplastic intermediate layer and electrically connected to metallic elements such as collector bands.

## Patentansprüche

1. Verfahren zur Herstellung einer aus mehreren Schichten bestehenden Verbundglasscheibe mit einem oder mehreren innerhalb einer thermoplastischen Zwischenschicht liegenden Drähten, bei dem vor dem Zusammenlegen der Schichten eine elektrisch leitende Verbindung zwischen den Drähten und einem oder mehreren Metallelementen hergestellt wird und anschließend die Schichten unter Anwendung von Wärme und Druck miteinander verbunden werden, **dadurch gekennzeichnet**, daß Drähte, welche auf ganzer Länge eine Oberflächenschicht aufweisen, vor dem elektrischen Verbinden mit den Metallelementen an den Verbindungsstellen durch eine gezielte, örtlich begrenzte Energiebeaufschlagung so weit erhitzt werden, daß dadurch auf der Drahtoberfläche haftende und einen erhöhten Übergangswiderstand hervorrufende Oberflächenschichten entfernt werden.

2. Verfahren nach Anspruch 1, **dadurch gekennzeichnet**, daß vor dem Zusammenlegen der die Verbundglasscheibe bildenden Schichten zunächst die Metallelemente und anschließend die Drähte über den Metallelementen auf der thermoplastischen Zwischenschicht abgelegt und fixiert werden, und daß die Energiebeaufschlagung erst nach dem Ablegen der Drähte auf der thermoplastischen Schicht oberhalb der Metallelemente erfolgt.

3. Verfahren nach Anspruch 1 oder 2, **dadurch gekennzeichnet**, daß die Energiebeaufschlagung an den Verbindungsstellen durch einen Laserstrahl erfolgt.

4. Verfahren nach Anspruch 3, **dadurch gekennzeichne**t, daß ein Laserstrahl mit einer Emissionswellenlänge von kleiner als 2,5 µm verwendet wird.

5. Verfahren nach Anspruch 1 oder 2, **dadurch gekennzeichnet**, daß die lokale Energiebeaufschlagung an den Verbindungsstellen durch eine Mikro-Gasflamme erfolgt.

6. Verfahren nach einem der Ansprüche 1 bis 5, **dadurch gekennzeichnet**, daß die Verbindungsstellen der Drähte während der Energiebeaufschlagung einer reduzierenden Gasatmosphäre ausgesetzt werden.

7. Verfahren nach einem der Ansprüche 2 bis 6, **dadurch gekennzeichnet**, daß mit einem Lötmetall beschichtete Metallelemente verwendet werden, und daß die Energiebeaufschlagung derart durchgeführt wird, daß gleichzeitig mit der Entfernung der Oberflächenschichten der elektrische Kontakt zwischen den Drähten und den Metallelementen durch das geschmolzene Lötmetall hergestellt wird.

8. Verfahren nach einem der Ansprüche 1 bis 6, dadurch gekennzeichnet, daß die elektrisch leitende Verbindung zwischen den Drähten und den Metallelementen durch einen elektrisch leitfähigen Kleber hergestellt wird.

9. Anwendung des Verfahrens nach einem der Ansprüche 1 bis 8 zum Herstellen einer elektrisch beheizbaren Verbundglasscheibe mit in der thermoplastischen Zwischenschicht in Parallelschaltung angeordneten und mit Sammelschienen elektrisch leitend verbundenen Heizdrähten aus Wolfram.
